# EUROPEAN PATENT SPECIFICATION

(11) **EP 3 851 347 B1**
(45) Date of publication and mention of the grant of the patent: **16.08.2023**
(21) Application number: 20198748.4
(22) Date of filing: 28.09.2020
(51) Int. Cl.: B60T 13/16

(54) **BRAKE MASTER CYLINDER, PREFERABLY FOR A HANDLEBAR VEHICLE**
BREMSHAUPTZYLINDER VORZUGSWEISE FÜR FAHRZEUG AUSGESTATTET MIT LENKBAR
MAÎTRE CYLINDRE POUR VÉHICULE, PRÉFÉRABLEMENT EQUIPÉ AVEC GUIDON

(30) Priority: 26.09.2019 IT 201900017321
(43) Date of publication of application: 21.07.2021
(73) Proprietor: AG SAS di Accossato Giovanni, 10029 Viallstellone (Torino) (IT)
(72) Inventor: ACCOSSATO, Giovanni, 10029 Villastellone (Torino) (IT)
(74) Representative: Mola, Edoardo

(56) References cited:
- EP-A1- 2 832 596
- WO-A1-2019/065738
- DE-A1-102006 015 009
- JP-A- 2008 254 467

## Description

### TECHNICAL FIELD

The present invention refers to a hydraulic piston brake pump for a generic brake assembly, preferably to be applied to a handlebar of a motorcycle or a bicycle for manual actuation or in the automotive field or on an aircraft landing gear.

### STATE OF THE ART

A brake assembly with a single master cylinder pump is known to multiply an input force, for example applied by means of a brake lever or pedal, by means of the action of a fluid, and thus actuate an actuator of a caliper for a brake disk.

In greater detail, a pump body houses a cylinder having a working stroke and a spring to keep the cylinder in a rest position in which the brake actuator is released and the brake caliper is open. The cylinder is immersed in a fluid, for example hydraulic, which fills a circuit including the brake caliper actuator. By means of an actuation element, for example a hand-operated lever of a handlebar, the cylinder moves along its own stroke and, with a correspondent movable seal carried by the cylinder, closes a calibrated supply orifice defined by the pump body, thus fluid-tight sealing the circuit. After passing the supply orifice, the cylinder continues its motion along the stroke pushed by the actuating element and the pressure of the circuit increases in such a way as to activate the actuator of the brake caliper.

In particular, the calibrated orifice has a reduced size to minimize the extrusion effect, and therefore the wear, therein that the increase in fluidic pressure causes on the cylinder seal.

In addition, the orifice is unique to avoid the increase of localized wear along the circumference of the seal on the cylinder. This makes the known pump particularly sensitive to obstruction of the orifice, for example as a result of impurities present in the actuation fluid.

The need is also always felt to reduce the wear of the seal and, in this way, increase its working life.

JP-A-2008254467 discloses a master cylinder for a car wherein the actuation of the piston features an elastomeric insert between the actuation pedal and the piston itself. This provides a relatively slow actuation of the car brakes when the pedal is pressed. WO-A1-2019065738 discloses a master cylinder for a car similar to that of the previous document and defining an axial gap interposed between the actuation pedal and the piston. Therefore, the piston moves only when the pedal is pressed so as to close such gap. Also in this case, the actuation of the car brakes is relatively slow.

### SCOPES AND SUMMARY OF THE INVENTION

The object of the present invention is to at least partially solve the drawbacks discussed above.

The object of the present invention is achieved by means of a brake master cylinder pump according to claim 1 and having a pump body with an inlet port for a fluid and an outlet port adapted to be fluidically connected to an actuator of a brake caliper, a piston housed in a pump body jacket and movable between a rest position in which the supply port and the outlet port are fluidically connected via a through hole through the piston and a pressurized position of an actuator fluid wherein the through hole is fluidically disconnected from the supply port through a seal carried by the jacket and a fluid pressure increases as the piston advances.

According to this configuration, the seal cooperates by sliding on an external surface, i.e. the piston surface, which can be easily inspected and machined at lower costs for the same roughness than an internal surface, i.e. the surface of the jacket. Furthermore, the presence of the through hole in the piston arranged on the opposite side of a fluid compression chamber with respect to the seal allows to keep the axial dimensions of the pump compact and, at the same time, allows a relatively long piston length to guide the translation in the jacket and piston stroke sufficient to generate the flow rate to operate an actuator of the brake calipers connected to the pump. In fact, to avoid jamming or wear, it is important that the piston has a certain longitudinal dimension and the through hole allows the supply port to be arranged in a position of the pump body facing the piston and, at the same time, to realize the rest position of the piston in which the pressurization chamber is fluidically connected to the tank.

According to a preferred embodiment of the present invention, the seal is a lip seal.

In particular, the seal, which is arranged so that the lip converges towards a fluid chamber inside the jacket, is stressed to tend to increase the diameter of the lip when the piston advances towards the chamber and the brake calipers close and to decrease the diameter of the lip when the piston returns to the rest position. The different behavior of the lip seal between the advancement and retraction of the piston is due to the asymmetry of the seal with respect to its mean plane. This configuration reduces the propensity of the lip to extrude into the through hole during use and, consequently, the lip seal according to the invention has an improved useful life with the same stresses. Further, the lip seal defines a relatively low piston contact surface at low pressure, e.g. when the piston is in the rest position. Therefore, it is possible to arrange the through hole with respect to the lip seal in such a position that a minimum stroke of the piston is sufficient to pass the contact zone with the lip seal and start to pressurize the fluid. This decreases an idle stroke of the piston and increases the responsiveness of the brake assembly when the user operates the actuating device, e.g. the lever.

According to an embodiment of the present invention, the piston has a plurality of through holes and the jacket has a recess configured to connect each through hole to the inlet port when the piston is in the rest position.

In this way, if a debris or other impurity is blocked in the through hole, the connection between the inlet port and the outlet port is guaranteed by another through hole when the piston is in the rest position. Therefore, the functionality of the pump is guaranteed with greater reliability even in oil conditions with debris or other impurities. Preferably the holes are arranged so as to simultaneously pass the seal to interrupt the fluidic connection between the inlet port and the outlet port. For example, the holes lie in a plane perpendicular to the piston stroke and the seal is annular with a lip. Even more preferably, the area of the cross sections of the through holes considered on the external surface of the piston is less than or equal to that of the inlet port. In this way, the through holes go beyond the seal, in particular the lip seal, with a minimum stroke and this increases the responsiveness of the master cylinder. Furthermore, the plurality of through holes has a relatively low hydraulic resistance: this facilitates the mobility of the oil and, therefore, the responsiveness of the brake pump. In order to reduce the piston stroke necessary to close the through holes, the latter have a cross section having a maximum dimension equal to or less than 2mm.

Furthermore, even thanks the arrangement of the lip seal, the presence of a plurality of holes does not increase either the extrusion of the lip or wear. For example, it is possible that the total sum of the area of the cross sections of the through holes is between 3.5 and 5.5 mm ^ 2 without compromising the wear of the lip, more preferably between 4 and 5 mm ^ 2. This section makes it possible to considerably improve the responsiveness of the pump in dynamic conditions as the fluid enters and exits with greater ease.

According to an embodiment of the present invention, the through hole has its own cross section having an area smaller than that of a cross section of the inlet port.

This provides to further increase the flow of oil to and out of the chamber without significantly increasing the extrusion of the seal inside the through holes when the fluid pressure increases.

According to a preferred embodiment of the present invention, the pump comprises a spring housed in the jacket to return the piston to the rest position.

In this way the spring is protected in the pump and constantly lubricated, increasing the useful life of the spring itself.

According to an embodiment of the present invention, the piston has a cross section having a dimension such as to guide the translation through contact with the jacket.

### BRIEF DESCRIPTION OF THE FIGURES

The present invention will be described hereinafter by means of a preferred embodiment, provided by way of non-limiting example, with reference to the attached drawing relating to a section along a plane containing a working stroke of the cylinder of a brake assembly according to the present invention. mounted on a guide handlebar.

### DETAILED DESCRIPTION OF THE INVENTION

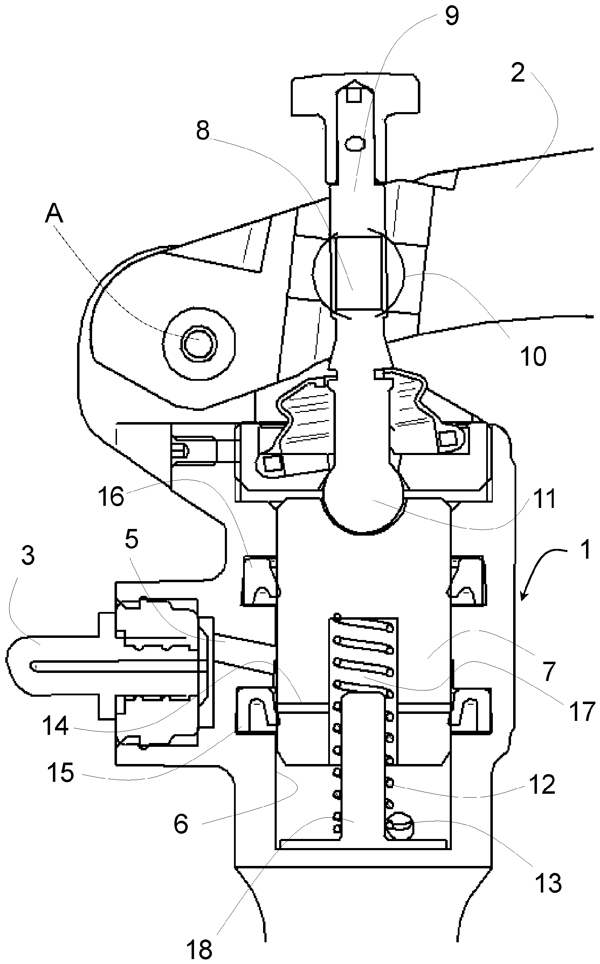

Figure 1 shows a pump 1 of a hand-operated braking unit by means of a lever 2 carried by a steering handlebar and fluidly connected to a tank (not shown) by means of a supply duct 3. Preferably, lever 2 is hinged around to an axis A and / or a fluid, for example a hydraulic fluid, enters the pump 1 by gravity through supply line 3.

Pump 1 comprises a pump body 4 configured to be carried by the guide handlebar, for example by means of a rigid mechanical connection, defining a inlet port 5 connected to supply duct 3, a jacket 6 fluidically connected to inlet port 5 and a piston 7 movable in jacket 6. Piston 7 translates into jacket 6 as a result of the load applied by means of an actuation element 8, for example a connecting rod or a pin moved by means of lever 2. In the example of embodiment illustrated in the figure, actuation element 8 comprises an end portion 9 external to pump body 4 and preferably connected to lever 2, for example by means of an articulated joint 10 and an end portion 11 longitudinally opposed to end portion 9 and arranged inside pump body 4 to apply a travel load to piston 7.

The action of actuation element 8 is opposed by a spring 12 inside jacket 6, preferably housed in a compression chamber of jacket 6, and configured to keep piston 7 in a position of minimum pressure inside the pump and / or full stroke of piston 7 (rest position). For example, in this stroke end position (in the figure), actuation element 8 is in a position of maximum extraction from pump body 4 and lever 2 is in an angular position of maximum opening. In this stroke end position, spring 12 can have a preload or be substantially unloaded.

According to the embodiment in the figure, when spring 12 is in the condition of minimum or no load (rest position of the piston), a brake actuator connected to pump 1 via a fluid circuit (not shown) is released and a brake caliper (not shown) is open such that a brake pad is spaced from a brake disc. The fluidic circuit is connected to pump 1 through an outlet port 13 defined by pump body 4 and exiting jacket 6. When spring 12 is in the condition of minimum or zero load, outlet port 13 is fluidically connected to supply port 5 through at least one through hole 14 of the piston. Furthermore, according to what is illustrated in Figure 1, pump body 4 carries a lip seal 15 acting on piston 7 in jacket 6 and seal 15 is arranged in such a position along jacket 6 as to allow the connection of the outlet port 13 to the inlet port 5 when the spring 12 is in the condition of minimum or zero load, that is, when the brake caliper is open. A lip of seal 15 converges towards the compression chamber so that, as piston 7 advances into the chamber, the relative movement tends to increase the diameter of the lip. On the contrary, when piston 7 retracts, the inclination of the lip is such that the correspondent internal diameter of the seal tends to decrease.

Pump body 4 carries a further seal 16 acting on piston 7 in jacket 6 and arranged between seal 15 and actuating element 8 along a direction of translation of piston 7 in jacket 6. The inlet port is arranged between seals 15 and 16.

Preferably, in order to provide a compact housing of spring 12 in jacket 6 and, at the same time, to provide a guide when spring 12 is compressed, piston 7 defines a cavity 17 inside which an end of the spring 12 is at least partially housed. A distal portion of spring 12 from piston 6 instead fits a pin 18 projecting inside jacket 6. Preferably, piston 7 is cylindrical and cavity 17 is coaxial to piston 7 and / or spring 12 is helical and is coaxial with piston 7 and / or pin 18 is coaxial with piston 7.

According to the preferred but non-limiting embodiment illustrated in the figure, the through hole 14 joins the cavity 17 to an external lateral surface of the piston 7. Furthermore, it is possible to provide a plurality of through holes 14, for example in an angularly equispaced configuration.

Advantageously, at least seal 15 and optionally also seal 16 are lip-shaped and have the concavity facing spring 12. In this way, as the pressure of the fluid increases, the pressure of seal 15 against piston 7 increases.

The pump of figure 1 can be supplied both as an initial system component of the brake group and as a retrofit component for brake groups already installed and functioning. Finally, it is clear that it is possible to make changes or variants to the brake unit described and illustrated here without departing from the scope of protection defined by the attached claims.

For example the seal, instead of lip, could be a Q ring, i.e. an elastic ring with a substantially square section.

Brake pump 1, as well as on board a vehicle with a handlebar such as a bicycle, a motorcycle, a snowmobile etc. it can be mounted on board a motorized land vehicle with steering wheel and be operated via a brake pedal, for example. Furthermore,
suitably sized, the brake pump is connected to a pressurized fluidic system of an aircraft and activates a brake caliper located on board an extractable or fixed landing gear.

## Claims

1. Brake master cylinder (1) having a body (4) with an inlet port (5) for a fluid and an outlet port (13) adapted to be fluidically connected to a brake caliper actuator, a piston (7) housed in a jacket (6) of the body (4) and movable between a rest position in which the inlet port (5) and the outlet port (13) are fluidically connected via a through hole (14) through the piston (7) and a position of pressurization of an actuator fluid in which the through hole (14) is fluidically disconnected from the inlet port (5) through a seal (15) carried by the jacket (6) and a fluid pressure increases with the advancement of the piston (7), **characterised in that** the cylinder further comprises an actuation element (8) having a connecting rod or a pin configured to press on the piston (7) when actuating the brake caliper actuator so that each displacement of the actuation element (8) causes a displacement of the piston (7).

2. Brake master cylinder according to claim 1, wherein the seal is a lip seal.

3. Brake master cylinder according to claim 1, wherein the piston (7) has a plurality of through holes (14) and the jacket (6) has a recess configured to fluidly connect each through hole (14) to the inlet port (5) when the piston is in the rest position.

4. Brake master cylinder according to any of the preceding claims, wherein the through hole (14) has a first cross section having an area less than that of a second cross section of the inlet port (5).

5. Brake master cylinder according to any one of the preceding claims, wherein the master cylinder (1) comprises a spring (12) housed in the jacket (6) to return the piston (7) to the rest position.

6. Retrofit method of a brake system comprising the step of supplying a brake master cylinder (1) according to any of the preceding claims and of connecting the outlet port (13) to a fluidic circuit for the implementation of a brake caliper.

7. Vehicle with handlebar comprising a brake caliper and a brake master cylinder according to any one of claims 1 to 5 for operating the brake caliper.

8. Aircraft landing gear comprising a brake caliper and a brake master cylinder according to any one of claims 1 to 5 for operating the brake caliper.

9. Motorized land vehicle with steering wheel comprising a brake caliper and a brake master cylinder according to any one of claims 1 to 5 for operating the brake caliper.

## Patentansprüche

1. Hauptbremszylinder (1) umfassend einen Körper (4) mit einem Einlassanschluss (5) für ein Fluid und mit einem Auslassanschluss (13), der mit einem Bremssattelbetätiger strömungstechnisch verbindbar ist, einen Kolben (7) in einer Laufbuchse (6) des Körpers (4) untergebracht und zwischen einer Ruheposition bewegbar, in der der Einlassanschluss (5) und der Auslassanschluss (13) über ein Durchgangsloch (14) durch den Kolben (7) in Fluidverbindung stehen, und eine Fluiddruckposition des Aktuators, in der das Durchgangsloch (14) über eine von der Laufbuchse (6) getragene Dichtung (15) flüssigkeitsmäßig vom Einlassanschluss (5) getrennt ist und ein Druck des Fluides mit dem Vorschieben des Kolbens (7) ansteigt, **dadurch gekennzeichnet, dass** der Zylinder weiterhin ein Betätigungselement (8) mit einer Pleuelstange oder einem Zapfen aufweist, das dazu ausgelegt ist, beim Betätigen des Bremssattelaktuators auf den Kolben (7) zu drücken, wodurch jede Bewegung des Betätigungselements (8) eine Bewegung des Kolbens (7) bewirkt.

2. Hauptbremszylinder nach Anspruch 1, wobei die Dichtung eine Lippendichtung ist.

3. Hauptbremszylinder nach Anspruch 1, wobei der Kolben (7) mehrere Durchgangslöcher (14) aufweist und die Laufbuchse (6) eine Aussparung aufweist, die derart konfiguriert ist, dass sie jedes Durchgangsloch (14) mit der Einlassöffnung (5) strömungstechnisch verbindet, wenn sich der Kolben in Ruhestellung befindet.

4. Hauptbremszylinder nach einem der vorhergehenden Ansprüche, wobei die Durchgangsöffnung (14) einen kleineren ersten Querschnitt als der zweite Querschnitt der Einlassöffnung (5) aufweist.

5. Hauptbremszylinder nach einem der vorhergehenden Ansprüche, wobei der Hauptbremszylinder (1) eine in der Laufbuchse (6) untergebrachte Feder (12) aufweist, um den Kolben (7) in seine Ruheposition zurückzuführen.

6. Verfahren zur Nachrüstung einer Bremsanlage umfassend den Vorgang der Speisung eines Hauptbremszylinders (1) nach einem der vorhergehenden Ansprüche und der Verbindung der Auslassöffnung (13) mit einem Flüssigkeitskreislauf zur Hertellung eines Bremssattels.

7. Fahrzeug mit Lenker umfassend einen Bremssattel und einen Hauptbremszylinder nach einem der Ansprüche 1 bis 5 zur Betätigung des Bremssattels.

8. Flugzeuglandeantrieb umfassend einen Bremssattel und einen Hauptbremszylinder nach einem der Ansprüche 1 bis 5 zur Betätigung des Bremssattels.

9. Motorisiertes landwirtschaftliches Fahrzeug mit einem Lenkrad umfassend einen Bremssattel und einen Hauptbremszylinder nach einem der Ansprüche 1 bis 5 zur Betätigung des Bremssattels.

## Revendications

1. Maître-cylindre de frein (1) avec un corps (4) avec un orifice d'entrée (5) pour un fluide et avec un orifice de sortie (13) qui peut être relié par un fluide à un actionneur d'étrier de frein, un piston (7) logé dans un manchon (6) du corps (4) et mobile entre une position de repos, dans laquelle l'orifice d'entrée (5) et l'orifice de sortie (13) sont en communication de fluide par un trou traversant (14) à travers le piston (7), et une position de pressurisation de fluide de l'actionneur, dans laquelle le trou traversant (14) est déconnecté en terme de fluide de l'orifice d'entrée (5) par un joint (15) porté par le manchon (6), et une pression de fluide augmente avec l'avancement du piston (7), **caractérisé en ce que** le cylindre comprend en outre un élément d'actionnement (8) avec une bielle ou goupille configurée pour appuyer sur le piston (7) lors de l'actionnement de l'actionneur d'étrier de frein, chaque mouvement de l'élément d'actionnement (8) provoquant un déplacement du piston (7).

2. Maître-cylindre de frein selon la revendication 1, dans lequel le joint est un joint à lèvre.

3. Maître-cylindre de frein selon la revendication 1, dans lequel le piston (7) a une pluralité de trous traversant (14) et le manchon (6) a un évidement configuré pour connecter en terme de fluide chaque trou traversant (14) à l'ouverture d'entrée (5), lorsque le piston est en position de repos.

4. Maître-cylindre de frein selon l'une des revendications précédentes, dans lequel le trou traversant (14) a une première section plus petite que la deuxième section de l'ouverture d'entrée (5) .

5. Maître-cylindre de frein selon l'une des revendications précédentes, dans lequel le maître-cylindre (1) comprend un ressort (12) logé dans le manchon (6) pour rappeler le piston (7) vers sa position de repos.

6. Procédé de rééquipement d'un système de frein comprenant l'opération d'alimentation d'un maître-cylindre de frein (1) selon l'une des revendications précédentes et la connexion de l'orifice de sortie (13) avec un circuit de fluide pour réaliser un étrier de frein.

7. Véhicule avec guidon comprenant un étrier de frein et un maître-cylindre de frein selon l'une des revendications 1 à 5 pour actionner l'étrier de frein.

8. Transmission d'atterrissage d'avion comprenant un étrier de frein et un maître-cylindre de frein selon l'une des revendications 1 à 5 pour actionner l'étrier de frein.

9. Véhicule agricole à moteur avec un volant comprenant un étrier de frein et un maître-cylindre de frein selon l'une des revendications 1 à 5 pour actionner l'étrier de frein.
